# EUROPEAN PATENT SPECIFICATION

(11) **EP 4 368 369 B1**
(45) Date of publication and mention of the grant of the patent: **01.10.2025**
(21) Application number: 24167712.9
(22) Date of filing: 25.02.2022
(51) Int. Cl.: B29C 53/60, B29C 53/82

(54) **MOLD AND SYSTEM CONFIGURED TO PRODUCE TUBULAR LAMINATED OBJECTS OF VARIABLE DIMENSION AND METHOD OF PRODUCING SAID OBJECTS**
FORM UND SYSTEM ZUR HERSTELLUNG VON ROHRFÖRMIGEN LAMINIERTEN OBJEKTEN MIT VARIABLER GRÖSSE UND VERFAHREN ZUR HERSTELLUNG DIESER OBJEKTE
MOULE ET SYSTÈME CONÇUS POUR PRODUIRE DES OBJETS STRATIFIÉS TUBULAIRES DE DIMENSION VARIABLE ET PROCÉDÉ DE PRODUCTION DESDITS OBJETS

(30) Priority: 25.02.2021 NL 2027644
(43) Date of publication of application: 15.05.2024
(62) Divisional of application: 22708146.0
(73) Proprietor: MERTENS NV, 2310 Rijkevorsel (BE)
(72) Inventor: ELST, Maikel, 2310 Rijkevorsel (BE)
(74) Representative: Arnold & Siedsma

(56) References cited:
- EP-A2- 0 206 268
- EP-A2- 0 264 244
- WO-A1-2016/129991
- DE-A1- 2 011 566
- US-A- 3 652 366
- US-A- 3 700 512
- US-A- 4 436 574
- US-A- 6 058 999
- US-A1- 2007 151 974

## Description

The invention relates to production of tubular laminated objects, such as tanks and silos. In particular, the invention provides a mold configured to produce tubular laminated objects on an outer circumference of the mold and a method of producing tubular laminated objects with a mold.

Molds configured to produce tubular laminated objects, such as tanks and silos, on an outer circumference of the mold have previously been developed. Typically, such molds are of a fixed circumference. Alternatively, in order to facilitate variation of the circumference, such molds may comprise wall segments surrounding a central shaft. In the latter case, the wall segments jointly define the outer circumference of the mold. In a known example of a mold of this type, each of the plurality of wall segments is held by a telescopic beam provided with positioning holes and pins. The length of each telescopic beam is set manually by removing the pins, lifting the attached wall segment with a crane, shifting the telescopic beam to another positioning hole and returning the pin through that hole. A dimension of the outer circumference of the mold, in particular a circular diameter of the mold, is thus set by adjusting a radial distance between each wall segment and the central shaft one by one.

The adjustment of the outer circumference according to the state of the art is a time and labor intensive process that has to be performed in a hardly accessible place within the mold.

Publication EP 0 264 244 A2 discloses an apparatus for manufacturing a resin tube. This apparatus comprises support means, a central shaft supported by the support means and extending therefrom, a pair of operating means supported by the central shaft at two separate positions, a plurality of rotatable forming rolls each supported by the operating means at both ends thereof in such a manner that the rotatable forming rolls are arranged circularly around the central shaft and that a cylindrical envelope formed by the rotatable forming rolls has a radius changeable by operation of the operating means, and a plurality of flexible link means each connected between one end of each rotatable forming roll and a driving means for simultaneously rotating the rotatable forming rolls in the same direction at any radius of the envelope. An extruded resin ribbon is supplied to these rotating forming rolls so that it is wound around the forming rolls with its side edges overlapped while being formed into a tubular body continuously being conveyed towards and withdrawn from the tip ends of the forming rolls.

In this prior art apparatus, the forming rolls are necessarily spaced apart and thus define a discontinuous hypothetical cylindrical surface onto which the resin ribbon is supplied. Further, this resin ribbon must cool or cure within the time interval between extrusion of the resin ribbon and withdrawal of the resin tube from the tip end of the forming rolls. These points impose limitations on the types of resin that can be used and on manufacturing throughput. For example, a resin of low viscosity may flow into the apparatus between the forming rolls and disturb operation.

A further disadvantage of the mechanism of this prior art apparatus is its large weight, especially due to its large conical cam body. Further, its conical cam bodies shift over the central shaft when adjusting the radius of the envelope defined by the rotatable forming rolls of the apparatus, which causes the conical cam bodies to protrude beyond the envelope in the direction of the central shaft. These disadvantages make this prior art system unusable to produce tanks and silos of conventional dimensions.

Publication DE 20 11 566 A1 discloses a core for wrapping cylindrical tank walls from artificial resin. This core is formed of a cylindrical hollow body with internal support. The cylindrical hollow body is formed of separate sections which are subsequently arranged in an axial direction and which are each slid onto carrying beams in an exchangeable way. The carrying beams are connected to the internal support and also extend in the axial direction. In one embodiment presented in this publication, the carrying beams are collectively moveable in a radial direction in order to set the separate sections of the cylindrical hollow body to a desired core diameter. At larger diameters, the separate sections are separated in a tangential direction by gaps which require covering by a foil before wrapping the artificial resin onto the core. In another embodiment presented in this publication, the longitudinal edges of the separate sections have a particular design for slotting into each other, which requires a sequential radial movement of the separate sections.

It is therefore an objective of the invention to overcome or at least reduce the above disadvantages. This is achieved through the invention by providing a mold configured to produce tubular laminated objects, such as tanks and silos, on an outer circumference of the mold, wherein the mold comprises:
- a central shaft extending in an axial direction;
- a plurality of wall segments extending in the axial direction, surrounding the central shaft and defining the outer circumference of the mold, wherein the mold is configured to set a dimension of the outer circumference of the mold by adjusting a radial distance of each of the plurality of wall segments relative to the central shaft; and
- an object support configured to support at least one of: a completed section of the tubular laminated object in alignment with the outer circumference of the mold defined by the plurality of wall segments, and a cap of the tubular laminated object.

Preferably, the mold further comprises an actuator for simultaneously adjusting the radial distance of each of the plurality of wall segments relative to the central shaft. Because the actuator is configured to adjust a radial distance of each of the plurality of wall segments relative to the central shaft simultaneously, the dimension of the outer circumference of the mold may be set in one operation. The time required to change from one dimension of the outer circumference (for example, a diameter of 8 m) to another (for example, a diameter of 10 m) is reduced. Moreover, said time is negligible with respect to the production time for a typical tank or silo. As an example, the time required for adjustment of the outer circumference of the mold according to this embodiment is about 15 minutes or less, contrasting with typically 4 hours or more required for adjusting circumference of state-of-the-art molds or for exchanging a mold in a production facility for another mold with a different diameter. Furthermore, the mold according to this embodiment provides greater flexibility in setting the circumference of the mold to numerous intermediate diameters, thus reducing the number of molds required in a production facility which otherwise would require large amounts of space. The mold according to this embodiment further enables improved fine adjustment of the outer circumference of the mold.

Further, the mold according to this embodiment has the advantage that a separate release mechanism for detaching a produced tubular laminated object from the mold is redundant and may be absent, thereby resulting in a simple and reliable mold. The actuator can decrease the dimension of the outer circumference of the mold by simultaneously reducing the radial distance of each of the plurality of wall segments relative to the central shaft and thereby release a produced tubular laminated object from the mold. In any embodiment of the invention, the wall segments can be shaped as panels, i.e. forming wall panels.

In the context of the present invention, the term 'radial' refers to a direction orthogonal to the axial direction defined by the orientation of the central shaft.

Though the outer circumference may have a cylindrical shape, which is a conventional shape for tanks and silo's, the mold of the present invention also permits other cross-sectional shapes, such as oval, egg-shaped and polygonal. Hence, the term 'tubular' must not be understood to be limited to cylindrical.

Preferably, the mold further comprises a plurality of adjustable connectors each arranged between an associated wall segment of the plurality of wall segments and the central shaft and configured to adjust the radial distance of the associated wall segment relative to the central shaft in response to actuation by the actuator. The adjustable connectors can be configured to remain within the confines of the outer circumference of the mold as defined by the plurality of wall segments during adjustment of the outer circumference, in particular when the adjustable connectors comprise mechanical linkages and/or articulated systems of rods as described below.

The actuator preferably comprises one or more than one hydraulic cylinder. Alternatively, one or more than one screw spindle can be employed. Although it is conceivable that the actuator, for example as a plurality of hydraulic cylinders and / or screw spindles, may define the plurality of adjustable connectors between the wall segments and the central shaft, the actuator is preferably configured to actuate the adjustable connectors. For example, the actuator may be configured to act in the radial direction to directly adjust the radial distance of each of the plurality of wall segments relative to the central shaft, or in the axial direction in which case the plurality of adjustable connectors may be configured to convert the action of the actuator in the axial direction into actuation in the radial direction.

Preferably, each adjustable connector is configured to maintain the associated wall segment substantially parallel to the axial direction. For example, each adjustable connector may comprise one or more than one hydraulic cylinder and / or mechanical linkage configured to hold the associated wall segment parallel to the axial direction at each radial distance of the associated wall segment relative to the central shaft.

Preferably, each adjustable connector comprises a mechanical linkage. Further it is preferred that one or more than one common carrier is connected to the mechanical linkages of the plurality of adjustable connectors and the actuator is configured to adjust a position of the one or more than one common carrier to thereby simultaneously actuate the mechanical linkages and set the dimension of the outer circumference of the mold. This has the advantage of improved simultaneous control of all wall segments.

Preferably, the position of the one or more than one common carrier is adjustable in the axial direction and each mechanical linkage is configured to convert adjustment of the position of the one or more than one common carrier into adjustment of the radial distance of the associated wall segment relative to the central shaft. This arrangement advantageously redirects and distributes action forces of the actuator in the axial direction for simultaneous adjustment of the radial distance of each of the plurality of wall segments, whereby the outer circumference of the mold is set.

Preferably, the one or more than one common carrier surrounds and is movable along the central shaft. The actuator may be configured to move the one or more than one common carrier along the central shaft. At least one of the one of more than one common carrier may comprise at least one roller and the central shaft may comprise at least one support surface configured to support the at least one roller. This arrangement reduces friction and prevents undesired deformations in the outer circumference of the mold. Alternatively, sliders may be employed instead of rollers.

Preferably, each mechanical linkage comprises one or more than one articulated system of rods configured to couple the associated wall segment to the central shaft. The term rod includes rails, bars and beams, for example comprising a T, H, O or U shaped cross section.

Preferably, each of the one or more than one articulated system of rods is coupled to the central shaft via at least one of the one or more than one common carrier. By means of the common carrier, forces acting on the articulated systems of rods are distributed and may be equalized. The articulated systems of rods may also be coupled to the central shaft without using common carriers.

Each of the one or more than one articulated system of rods preferably comprises a first rod pivotally coupled to the central shaft and to the associated wall segment, and a second rod pivotally coupled to the central shaft and to the first rod, wherein at least one of the first rod and the second rod is slidably arranged on the central shaft. When one of the first rod and the second rod is slidably arranged on the central shaft, the other of the first rod and the second rod may be pivotally (i.e. not slidingly) arranged on the central shaft. Alternatively, each of the first rod and the second rod may be slidably arranged on the central shaft via an associated common carrier.

Further, the second rod may be pivotally coupled to the associated wall segment and the first rod or the second rod may be slidably arranged on the associated wall segment.

Preferably, the mechanical linkage comprises a plurality of articulated systems of rods arranged at an axial offset (i.e. at an offset in the axial direction in which the central shaft extends). This improves stability of the wall segments relative to the central shaft. Further, at least two of the plurality of articulated systems of rods may be oppositely arranged relative to each other in the axial direction. This arrangement further improves stability and rigidity of the mold to bear its own weight and that of the laminate thereon.

The dimension of the outer circumference of the mold may be continuously adjustable between a minimum dimension of the outer circumference and a maximum dimension of the outer circumference. This may be implemented by means of a continuously adjustable actuator.

The plurality of wall segments may be configured to overlap along the outer circumference of the mold at least when the actuator is set to a minimum dimension of the outer circumference of the mold. Preferably, an overlap is maintained at a maximum dimension of the outer circumference of the mold.

**The** wall segments of the mold can be shaped as panels. This can facilitate overlap and/or contact between wall segments to prevent spaces between the wall segments, thus enabling an enclosed outer circumference. The wall segments, whether shapes a panels or not, can be bend along the outer circumference of the mold. Alternatively or additionally, the wall segments can be configured to contact neighboring wall segments when overlapping.

The mold further comprises the object support which may be configured to support a completed section of the tubular laminated object in alignment with the outer circumference of the mold defined by the plurality of wall segments. That is, the inner circumference of the completed section of the tubular laminated object is aligned with respect to the outer circumference of the mold by means of the object support. The completed section may be aligned in partial overlap with the outer circumference of the mold.

The object support may comprise a cap support configured to support a cap of the tubular laminated object. Preferably, the mold further comprises an extendable shaft configured to support the cap support and to extend in the axial direction. Preferably, the extendable shaft is arranged on or in the central shaft.

The axial direction may extend in an upright direction. Alternatively, the axial direction may extend in a horizontal direction. The mold may thus be configured for operation in an upright orientation or in a lying orientation. In latter case, the axial direction extends in the horizontal direction, or at least in a direction ± 15° around the horizontal with respect to gravity.

The invention further provides a system configured to produce tubular laminated objects, such as tanks and silos, wherein the system comprises a mold according to the invention configured to produce tubular sections for the tubular laminated objects on the outer circumference of the mold and a cap mold configured to produce caps for tubular laminated objects, such as end caps for tanks and silos, on an outer surface of the cap mold, wherein a radial dimension of the outer surface of the cap mold is at least as large as a maximum radial dimension of the outer circumference of the mold.

Because of the relative radial dimensions of the mold and the cap mold, the cap mold is configured to produce laminated object caps that extend beyond any set dimension of the outer circumference of the mold to provide an overlap.

Preferably, the cap mold is conically shaped. The conical shape of the cap mold preferably comprises an inclination angle relative to the base plane of the cone in a range of 10° - 30°, more preferably 15° - 25° and most preferably of 20°. These shapes and angles are preferred to provide strength to the cap produced using the cap mold without requiring excess laminate. A surprisingly advantageous balance is obtained between laminate thickness and strength in a cap of the shape, which is capable of carrying a tubular laminated object produced integrally with it.

Further, the invention provides a method of producing tubular laminated objects, such as tanks and silos, with a mold comprising a plurality of wall segments defining an outer circumference of the mold, wherein the method comprises:
- a step C of adjusting, preferably simultaneously adjusting, a position of each of the plurality of wall segments to set a dimension of the outer circumference of the mold;
- a step E of providing laminate onto the outer circumference of the mold to produce a tubular laminated object; and
- a step F of adjusting, preferably simultaneously adjusting, the position of each of the plurality of wall segments to decrease the dimension of the outer circumference of the mold and release the produced tubular laminated object from the mold. The release of the produced tubular laminated object from the mold is effected by the decrease of the dimension of the outer circumference of the mold. The method further comprises a step B of arranging a cap at an axial end of the outer circumference of the mold on a cap support of the mold. Alternatively or additionally, the method further comprises a step G of shifting the produced tubular laminated object in the axial direction along the outer circumference, a step H of adjusting, preferably simultaneously adjusting, the position of each of the plurality of wall segments to hold the produced tubular laminated object in its shifted position and a step J of providing laminate onto the outer circumference of the mold to extend the produced tubular laminated object.

The produced tubular laminated object thus has an inner circumference determined by the dimension of the outer circumference of the mold as set by (simultaneous) adjustment of the plurality of wall segments of the mold.

Preferably, at least one of the steps C and F is executed by an actuator of the mold. More preferably, each of the steps C and F are executed by the same actuator of the mold.

The method may comprise the step B and may further comprise a step D of providing laminate onto the cap and overlapping with the outer circumference of the mold to produce the laminated tubular object with the cap integrated.

Preferably, the method further comprises a step A of providing laminate onto an outer surface of a cap mold to produce the cap.

The step H can be executed by an actuator of the mold, preferably the same actuator that is also used for the steps C and F.

Preferably, the step G comprises raising the mounted cap to a higher level and thereby raising the tubular laminated object produced integrally with the cap.

The method according to any of the embodiments presented herein may comprise employing the mold and / or the system according to the invention.

In particular aspects of the present disclosure, not all features of the invention as described above are in fact essential.

In a first aspect which is not independently claimed here, the mold is improved with a particular adjustment mechanism. The mold is configured to produce tubular laminated objects, such as tanks and silos, on an outer circumference of the mold, wherein the mold comprises:
- a central shaft extending in an axial direction;
- a plurality of wall segments extending in the axial direction, surrounding the central shaft and defining the outer circumference of the mold;
- an actuator configured to set a dimension of the outer circumference of the mold by simultaneously adjusting a radial distance of each of the plurality of wall segments relative to the central shaft; and
- a plurality of adjustable connectors each arranged between an associated wall segment of the plurality of wall segments and the central shaft and configured to adjust the radial distance of the associated wall segment relative to the central shaft in response to actuation by the actuator, wherein each adjustable connector comprises a mechanical linkage comprising one or more than one articulated system of rods configured to couple the associated wall segment to the central shaft.

This mold according to the first aspect can further comprise additional features described above in relation to the mold according to the invention.

With this mold according to the first aspect, it is further possible that the plurality of wall segments are at least one of: shaped as panels; and configured to overlap along the outer circumference of the mold at least when the actuator is set to a minimum dimension of the outer circumference of the mold. The plurality of wall segments can be configured to maintain overlap along the outer circumference of the mold when the actuator is set to a maximum dimension of the outer circumference of the mold.

In a second aspect which is not independently claimed here, the mold enables overlap of wall segments. This mold is configured to produce tubular laminated objects, such as tanks and silos, on an outer circumference of the mold, wherein the mold comprises:
- a central shaft extending in an axial direction;
- a plurality of wall segments extending in the axial direction, surrounding the central shaft and defining the outer circumference of the mold; and
- an actuator configured to set a dimension of the outer circumference of the mold by simultaneously adjusting a radial distance of each of the plurality of wall segments relative to the central shaft,
wherein the plurality of wall segments are at least one of: shaped as panels ; and configured to overlap along the outer circumference of the mold at least when the actuator is set to a minimum dimension of the outer circumference of the mold.

Preferably, the plurality of wall segments is configured to maintain overlap along the outer circumference of the mold when the actuator is set to a maximum dimension of the outer circumference of the mold.

The mold according to this second aspect can further comprise additional features that are described above in relation to the mold of the first aspect as well as features defined in relation to the mold according to the invention. For example, the mold of the second aspect can be provided with an object support and/or an adjustment mechanism as described herein.

In a third aspect which is claimed here, the mold is configured to produce tubular laminated objects, such as tanks and silos, on an outer circumference of the mold, wherein the mold comprises:
- a central shaft extending in an axial direction;
- a plurality of wall segments extending in the axial direction, surrounding the central shaft and defining the outer circumference of the mold, wherein the mold is configured to set a dimension of the outer circumference of the mold by adjusting, preferably simultaneously adjusting by means of an actuator, a radial distance of each of the plurality of wall segments relative to the central shaft; and
- an object support configured to support at least one of: a completed section of the tubular laminated object in alignment with the outer circumference of the mold defined by the plurality of wall segments; and a cap of the tubular laminated object.

In this aspect of the mold with the object support, the actuator is not essential nor does the adjustment need to occur simultaneously. This also applies to any mold as disclosed herein which comprises an object support.

Preferably, the object support comprises a cap support configured to support the cap of the tubular laminated object. Further, this mold can further comprise an extendable shaft configured to support the object support and to extend in the axial direction. More preferably, the extendable shaft supports the cap support comprised by the object support. The extendable shaft can be arranged on or in the central shaft.

The mold according to the third aspect can also comprise features of the mold of the first aspect and/or the second aspect. For example, the mold can comprise an object support in addition to panel-shaped wall segments or adjustable connectors of any form herein disclosed. Finally, the cap support can be provided separately from the object support.

Aspects of the invention are further explained using the appended figures, in which:
FIG. 1 shows a perspective view of a first embodiment of the mold;
FIG. 2 shows a cross-sectional perspective view of the mold of FIG. 1;
FIG. 3 shows a perspective view of a second embodiment of the mold;
FIG. 4A - 4E show schematic views of variants of a mechanical linkage of preferred embodiments of the mold;
FIG. 5 shows a perspective view of a preferred embodiment of a cap mold of the system;
FIG. 6 shows a first embodiment of the method that is related to the mold of FIGS. 1-2 and the cap mold of FIG. 5;
FIG. 7 shows a second embodiment of the method that is related to the second embodiment of FIG. 3.

The following reference signs are used.
- 1: mold
- 2: central shaft
- 3: wall segment or wall panel
- 4: actuator
- 5: spacer frame
- 6: adjustable connector
- 7: mechanical linkage
- 8: common carrier
- 9: object support
- 10: cap support
- 11: extendable shaft
- 12: base
- 13: roller
- 14: support surface
- 15: radial object support
- 16: articulated system of rods
- 17: first rod
- 18: second rod
- 19: slider
- 20: connection beam
- 30: cap mold
- 100: tubular laminated object
- 101: completed section
- 102: extension section
- 103: overlap section
- 110: cap
- 200: axial direction

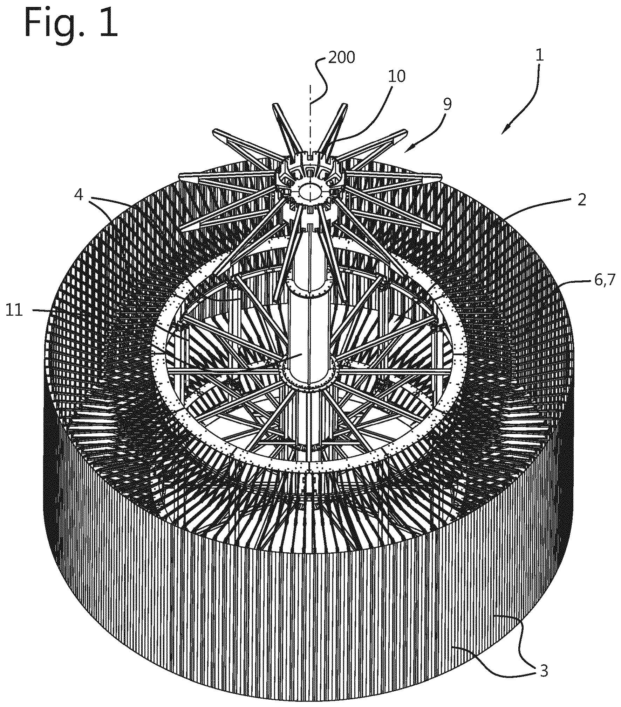

FIGS. 1-2 show different views of a first embodiment of a mold 1 according to the invention, which also comprises various preferred yet optional features. The mold 1 is configured to produce tubular laminated objects 100 on an outer circumference of the mold 1. The produced tubular laminated objects 100 may serve as (segments of) tanks and silos and may be open at both ends or comprise a cap 110 at one or at both of its ends.

The mold 1 comprises a central shaft 2 extending in an axial direction 200. A plurality of wall segments 3 extends in the axial direction 200, surrounds the central shaft 2 and defines the outer circumference of the mold 1. The tubular laminated object 100 is to be produced on the outer circumference, thus on the plurality of wall segments 3. In practice, an intermediate layer such a plastic film may be disposed on the outer circumference of the mold before laminating the tubular laminated object 100 onto the plurality of wall segments 3. As shown in FIGS. 1-3, the wall segments 3 can be shaped as panels, thus forming wall panels 3. The wall segments or panels 3 can be configured to mutually define a continuous outer circumference of the mold 1. In addition or alternatively, the wall segments 3 can be bend along the outer circumference of the mold and/or configured to contact neighboring wall segments 3. For example, the wall segments or panel 3 can include a bend or kink line extending in the axial direction 200 along the wall segment or panel 3 to provide at least two planar sections in the at least partly planar surface of the wall segment or panel 3. This facilitates setting of the dimension of the outer circumference of the mold 1 and any overlapping of wall segments 3, which can involve contact between neighboring wall segments or panels 3. A wall panel 3, optionally having said bend or kink line, is preferred for simplicity of manufacturing over a fully curved or rotatable wall segment 3, though these are also possible.

Further, the mold 1 comprises an actuator 4 configured to set a dimension of the outer circumference of the mold 1 by simultaneously adjusting a radial distance of each of the plurality of wall segments 3 relative to the central shaft 2.

In the first embodiment, the central shaft 2 includes an optional spacer frame 5 configured to enlarge a radial dimension of the central shaft 2. The spacer frame 5 enables a radial offset in the dimension of the outer circumference and presents an enlarged perimeter for mounting the wall segments 3, thereby providing a strong and stiff construction of the mold 1 even at large dimensions of the outer circumference, for example diameters over 6 m.

The mold 1 according to the illustrated first embodiment further comprises a plurality of adjustable connectors 6 each arranged between an associated wall segment 3 of the plurality of wall segments 3 and the central shaft 2 and configured to adjust the radial distance of the associated wall segment 3 relative to the central shaft 2 in response to actuation by the actuator 4. That is, each adjustable connector 6 is associated with a wall segment 3. As illustrated, each adjustable connector 6 is configured to maintain the associated wall segment 3 substantially parallel to the axial direction 200. Thereby, the outer circumference of the mold 1 and thus the tubular laminated object 100 produced with it, comprises a substantially constant cross section along the axial direction 200. Alternatively, angled configurations are possible to provide a frustoconical shape in the outer circumference of the mold 1.

As illustrated in FIGS. 1-2, each adjustable connector 6 comprises two mechanical linkages 7. The mechanical linkages 7 of each adjustable connector 6 are arranged in a radial plane between the central shaft 2 and the associated wall segment 3. The mechanical linkages 7 may thus be considered planar.

Further, two common carriers 8 are connected to the mechanical linkages 7 of the plurality of adjustable connectors 6. Here, the actuator 4 is configured to adjust a position of the common carriers 8 to thereby simultaneously actuate the mechanical linkages 7 and set the dimension of the outer circumference of the mold 1. In particular, the position of the common carriers 8 is adjustable in the axial direction 200 and each mechanical linkage 7 is configured to convert adjustment of the position of the common carriers 8 into adjustment of the radial distance of the associated wall segment 3 relative to the central shaft 2. As illustrated, it is preferred that the common carriers 8 surround the central shaft 2 and are movable along the central shaft 2.

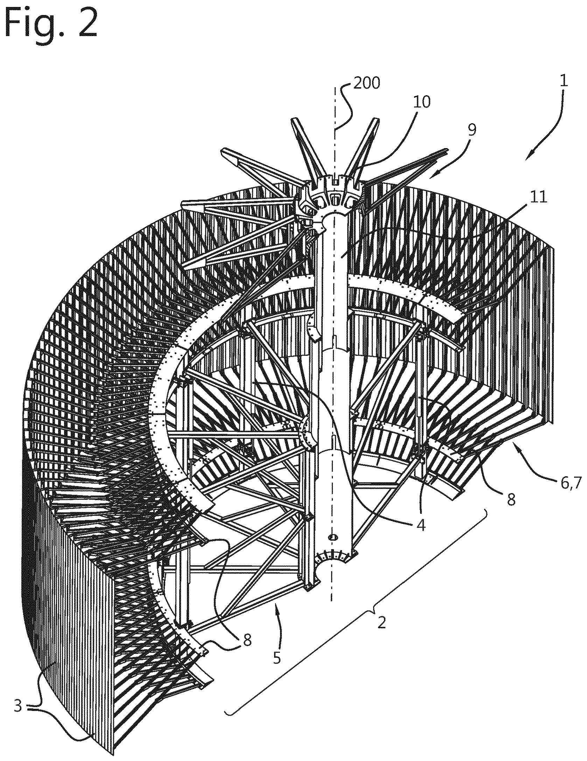

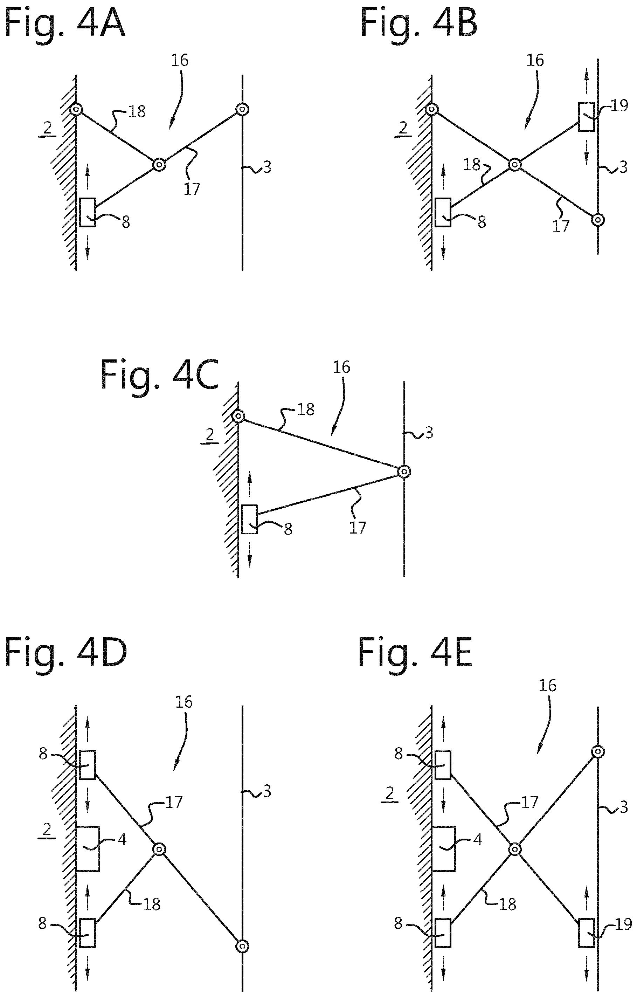

The working of this mechanism is particularly clear from FIG. 2. When the actuator 4, here illustrated as a plurality of hydraulic cylinders, acts on the common carriers 8, it adjusts their position along the axial direction 200. The common carriers 8 here slide along guiding beams which present a support surface 14 to the common carriers 8. In turn, the mechanical linkages 8 coupled to the common carriers 8 follow this movement along the axial direction 200 and by their construction convert this axial movement in a radial adjustment of the position of the wall segment 3 coupled to the mechanical linkages 7. Various implementations of the mechanical linkages 7 are explained in relation to FIG. 4.

It is preferred that the dimension of the outer circumference of the mold 1 is continuously adjustable between a minimum dimension of the outer circumference and a maximum dimension of the outer circumference. Alternatively or additionally, the plurality of wall segments 3 are configured to overlap along the outer circumference of the mold at least when the actuator 4 is set to a minimum dimension of the outer circumference of the mold 1. In FIGS. 1-2, the mold 1 is shown at the maximum dimension of the outer circumference, which is here obtained by extending the plurality of hydraulic cylinders which from the actuator 4 to their maximum length and thereby pushing the common carriers 8 to a maximum outward position along the axial direction 200 which in turn act on the plurality of mechanical linkages 7 that carry the plurality of wall segments 3 to a maximum radial distance from the central shaft 2.

The mold 1 further comprises an object support 9 configured to support a completed section 101 of the tubular laminated object 100 in alignment with the outer circumference of the mold 1 defined by the plurality of wall segments 3. This arrangement makes it possible to laminate an extension section 102 of the tubular laminated object 100 on the outer circumference of the mold 1 when the completed section 101 of the tubular laminated object 100 is in a shifted position along the axial direction 200, thus freeing at least part of the outer circumference of the mold 1 and making it available for further applying laminate thereon.

The object support 9 may be implemented in various ways. As illustrated for the first embodiment, the object support 9 comprises a cap support 10 configured to support a cap 110 of the tubular laminated object 100. The mold 1 of this embodiment further comprises an optional extendable shaft 11 configured to support the cap support 11 and to extend in the axial direction 200. The extendable shaft 11 is preferably arranged on or in the central shaft 2. In the illustrated first embodiment, a heavy-duty hydraulic cylinder may be arranged in the central shaft 2 to provide a lifting force for adjusting a position of the extendable shaft 11 along the axial direction 200. Preferably, the same actuator 4 is used to actuate the extendable shaft 11 and the plurality of wall segments 3. For example, when using hydraulic cylinders, the actuator 4 may comprise a common source of adjustable hydraulic pressure.

The object support 9 of the first embodiment may be seen as an internal object support arranged within the outer circumference of the mold 1. Additionally, the object support 9 may comprise an external support configured to support the completed section 101 of tubular laminated object 100 from outside the outer circumference of the mold 1. Whether internal or external, the object support 9 preferably carries the weight of the completed section 101 of the tubular laminated object 100 and may be placed on a production floor or be suspended from a crane. When an object support 9 is not arranged on the mold 1, it preferably comprises rollers over which the completed section 101 may roll when the mold 1 is rotated. The object support 9 may be configured to prevent sagging of the completed section 101 or bending of the completed section 101 relative to the extension section 102. Further, it may reduce torsion between the completed section 101 and the extension section 102 of the tubular laminated object 100 when providing laminate onto the outer circumference of the mold 1 during rotation of the mold 1.

The first embodiment of the mold 1 may advantageously be employed with the axial direction 200 extending in an upright direction. That is, the mold lof FIGS. 1-2 may stand on a production floor with the central shaft 2 upright.

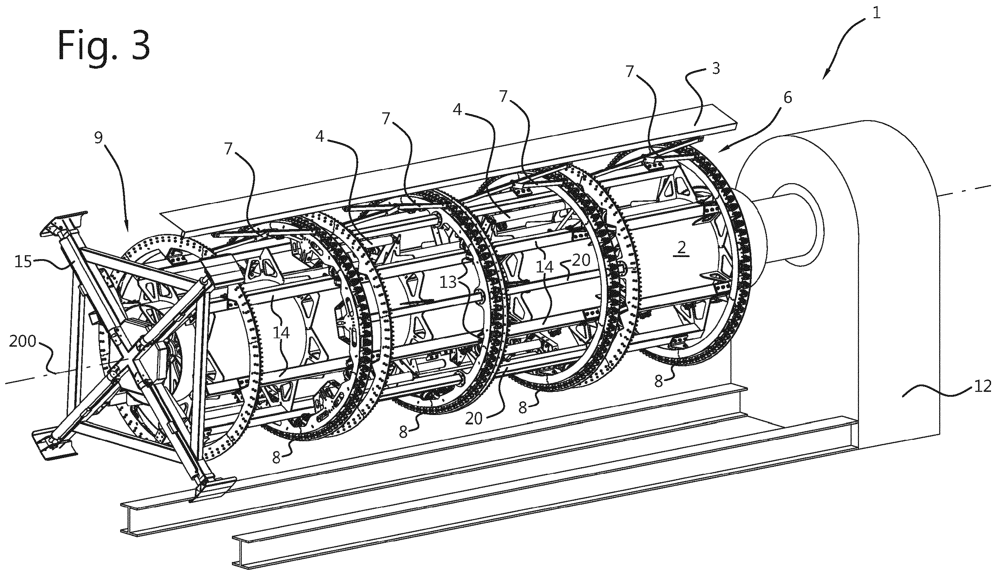

FIG. 3 shows a second embodiment of the mold 1. This second embodiment shares many features with the first embodiment shown in FIGS. 1-2. Repeating descriptions of corresponding features is omitted here for conciseness.

To better illustrate the second embodiment, only one wall segment 3 is illustrated in FIG. 3. The wall segment 3 is coupled to the central shaft 2 via an adjustable connector 6. In contrast to the first embodiment, the central shaft 2 does not comprise a spacer frame 5 here, allowing smaller dimensions of the outer circumference of the mold 1 in this case. The adjustable connector 6 here comprises four of mechanical linkages 7, each arranged between the wall segment 3 and the central shaft 2. Each mechanical linkage 7 is coupled to a common carrier 8. However, any number of mechanical linkages 7 and / or common carriers 8 can be employed.

The common carriers 8 here comprise rollers 13 which are supported by a support surface 14 of the central shaft 2. In this embodiment, the actuator 4 is configured to adjust a position of the common carriers 8 along the central shaft 2 in the axial direction 200. For example, the actuator 4 may comprise one or more hydraulic cylinders configured to act on the common carriers 8.

The axial direction 200 here extends in a horizontal direction. The central shaft 2 is supported by a base 12 configured to suspend the mold 1. The second embodiment of the mold 1 is particularly suitable for use in a lying orientation with the axial direction horizontal, while the first embodiment of the mold 1 is particularly suitable for a standing orientation with the axial direction upright. In a standing mold, larger dimensions of the outer circumference can be obtained compared to a horizontal mold because of an improved transfer of gravitational forces in standing molds. However, lying molds provide improved access to the outer circumference of the mold 1 allowing faster production.

The mold 1 of FIG. 3 further comprises an object support 9 which is arranged at an end of the outer circumference of the mold 1. The object support 9 is configured to support a completed section 101 of the tubular laminated object 100 in alignment with the outer circumference of the mold 1 defined by the plurality of wall segments 3, understood to be part of the mold 1 according to the second embodiment, though not illustrated. The object support 9 is implemented here with four radial object supports 15 which are radially adjustable. When a completed section 101 of the tubular laminated object 100 is shifted along the outer circumference of the mold 1 in the axial direction 200, it may be held in that position by the plurality of wall segments 3 (at least the ends thereof) and by the radial object supports 15. The wall segments 3 and the radial object supports 15 may be set to the same dimension of the outer circumference to achieve this, when the tubular laminated object 100 is cylindrical. Torsion is then reduced between the completed section 101 and the extension section 102 which is then produced by providing laminate onto the outer circumference of the mold 1, generally while rotating the mold 1 or at least its outer circumference.

Though FIGS. 1-2 and FIG. 3 show the actuator 4 embodied as a plurality of hydraulic cylinders, a plurality of screw spindles can also be employed. Further, it is conceivable that the actuator 4 is formed by a single hydraulic cylinder or screw spindle, or a combination thereof.

Though the first and second embodiments of the mold 1 are described separately, features of these two embodiments may be combined. For example, the base 12 and / or radial object supports 15 of FIG. 3 may be employed with the mold 1 of FIG. 1 while the cap support 10 and / or extendable shaft 11 of FIG. 1 may be implemented with the mold 1 of FIG. 3.

FIGS. 4A-4E show variants of a mechanical linkage 7 which may be employed in any of the embodiments of the mold 1 according to the invention. In particular, the adjustable connector 6 may comprise one or more of the illustrated mechanical linkages 7.

The mechanical linkage 7 may comprise one or more than one articulated system of rods 16 configured to couple the associated wall segment 3 to the central shaft 2. For example, each mechanical linkage 7 comprises at least one articulated system of rods 16 having an inner end coupled to the central shaft 2 and an outer end coupled to the respective one of the plurality of wall segments 3 that is coupled to the mechanical linkage 7. Preferably, each of the one or more than one articulated system of rods 16 is coupled to the central shaft 2 via at least one of the one or more than one common carrier 8.

In the illustrated variants, the articulated system of rods 16 comprises a first rod 17 pivotally coupled to the central shaft 2 and to the associated wall segment 3 and a second rod 18 pivotally coupled to the central shaft 2 and to the first rod 17. At least one of the first rod 17 and the second rod 18 is/are slidably arranged on the central shaft 2.

In FIGS. 4A and 4D, the articulated system of rods 16 presents lambda-shaped configuration when viewing the articulated system of rods 16 sideways (i.e. along an axis perpendicular to a radial plane between the central shaft 2 and the wall segment 3), while in FIGS. 4B and 4E it presents an X-shaped configuration and in FIG. 4C it presents a V-shaped configuration. These configurations may be summarized in other words: the first rod 17 is coupled to the central shaft 2 at its radially inner end and to the wall segment 3 at is radially outer end, while the second rod 18 is coupled to the central shaft 2 at its radially inner end and at to the first rod 17 at a distance from the inner end of the first rod that is coupled to the central shaft.

Because the first rod 17 and a second rod 18 are pivotally coupled towards the central shaft 2 at a mutual distance adjustable by the actuator 4, each of the illustrated articulated systems of rods 16 provide a simple yet effective construction. They provide leverage to action of the actuator 4 acting in the axial direction to adjust a radial position of the wall segment 3. Further, a stabile construction is provided which allows a continuously adjustable range of outer circumference accessible by the mold 1. Further, this range is enlarged compared to that of conventional molds.

As shown in FIGS. 4D and 4E, each of the first rod 17 and the second rod 18 may be slidably arranged on the central shaft 2 via an associated common carrier 8. When both the first rod 17 and the second rod 18 are each coupled to a respective common carrier 8 (that is, two different common carriers 8 from among a plurality of common carriers 8), the actuator 4 may be fixed with respect to the axial direction 200 and configured to adjust a separation between the common carriers 8 of the first rod 17 and second rod 18.

As shown in FIGS. 4B, 4C and 4E, the second rod 18 may be pivotally coupled to the associated wall segment 3. Further, the first rod 17 or the second rod 18 may be slidably arranged on the associated wall segment 3, for example via a slider 19 as illustrated in FIGS. 4B and 4E.

The mechanical linkage 7 may comprise a plurality of articulated systems of rods 16 arranged at an axial offset. In other words, each mechanical linkage 7 may comprise at least two similar or different articulated systems of rods 16 which are mutually spaced apart in the axial direction 200. Consequently, each of the plurality of wall segments 3 is connected to the central shaft 2 via at least two articulated systems of rods 16. When spacing apart the plurality of articulated systems of rods 16 in the axial direction 200, the mold 1 can better accommodate movement of common carriers 8 associated with the plurality of articulated systems of rods 16. Examples of such arrangements are given in FIGS. 1-3.

When the mechanical linkage 7 comprises a plurality of articulated systems of rods 16 arranged at an axial offset, multiple common carriers 8 may be employed, each coupled to at least one of the plurality of articulated systems of rods 16 of the mechanical linkage 7. These common carriers 8 may be mutually connected by connection beams 20 in order to fix their mutual spacing in the axial direction 200 in order to stabilize positioning of the articulated systems of rods 16 coupled to these common carriers 8. This stabilizes the radial position of the plurality of wall segments 3 held by the mechanical linkages 7, thus more accurately setting the outer circumference of the mold 1. For example, as illustrated in FIG. 3, the two common carriers 8 nearest the object support 9 are coupled via connection beams 20. When these two common carriers 8 are moved along the axial direction 200 towards the object support 9, each mechanical linkage 7 increases the radial distance between the wall segment 3 and the central shaft 2 (and vice versa). The remaining two common carriers 8 in FIG. 3 work similarly, though in the opposite direction. The connection beams 20 thus stabilize the mutual positioning of the common carriers 8.

At least two of the plurality of articulated systems of rods 16 may be oppositely arranged relative to each other in the axial direction 200. The at least two of the plurality of articulated systems of rods 16 may thus define a mirrored pair or articulated systems of rods 16, that is one of the articulated system of rods 16 of the pair is reversed with respect to the other of the pair.

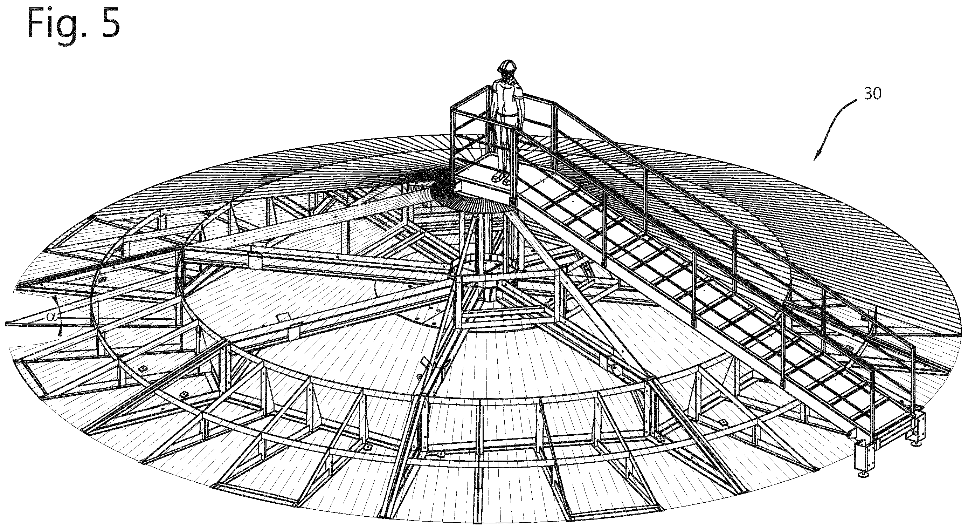

FIG. 5 shows a preferred embodiment of a cap mold 30 for a system according to the invention. The system is configured to produce tubular laminated objects 100, such as tanks and silos, which may advantageously comprise a cap 110 at one or both ends. The system comprises a mold 1 according to the invention and a cap mold 30. The cap mold 30 is configured to produce caps 110 for tubular laminated objects 100, such as end caps for tanks and silos, on an outer surface of the cap mold 30. A radial dimension of the outer surface of the cap mold 30 is at least as large as a maximum radial dimension of the outer circumference of the mold 1.

In the illustrated embodiment, the cap mold 30 is conically shaped. It is preferred that an inclination angle α relative to the base plane of the cone is in a range of 10° - 30°, more preferably 15° - 25° and most preferably of 20°. The fixed inclination angle, rather than conventional dome-shapes for end caps, allows use of a single cap mold 30 in combination with a single mold 1 to produce tubular laminated products 100 of various dimensions in a time and resource efficient way.

It is noted that these inclination angles α correspond to aperture angles θ of the conical shape in a range of 160° - 120°, 150° - 130° and 140°, respectively. A right circular cone shape is preferred to match with circular tubular laminated objects 100. However, oval, egg-shaped or polygonal shapes are also possible for the cap mold 30 as well as for the mold 1.

Further, the conical shape of the cap mold 30, especially at the mentioned angles, allows compliant overlap between a laminated object cap 110 and the outer circumference of the mold 1 so that the tubular laminated object 100 may be laminated in overlap with the laminated object cap 110.

When the system comprises a mold 1 with a cap support 10, the cap support 10 is preferably configured to match a shape of the cap 110 obtained with the cap mold 30.

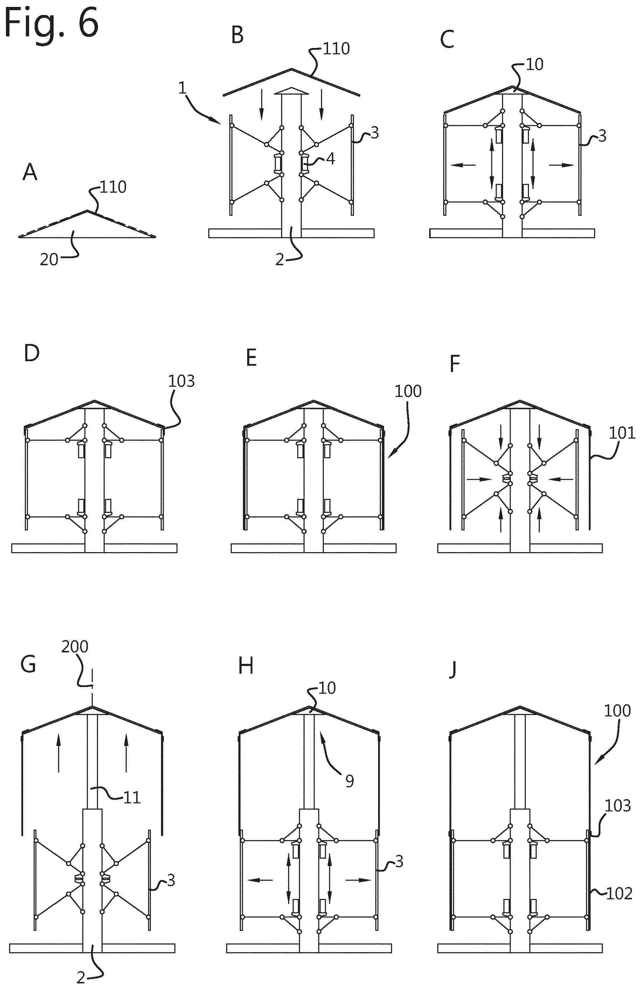

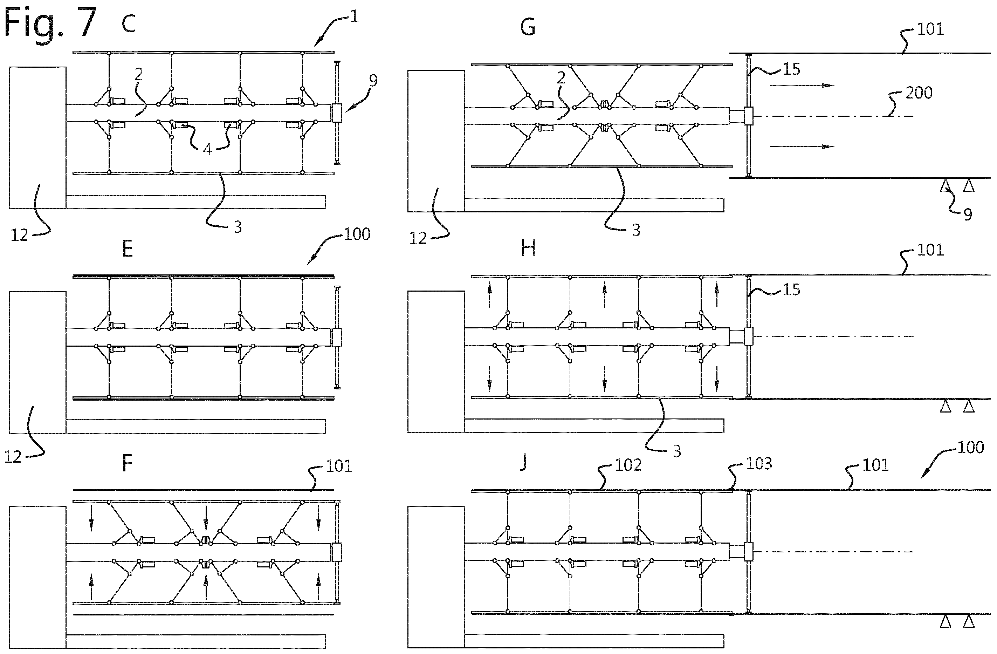

FIGS. 6 and 7 illustrate advantageous first and second embodiments of a method of producing tubular laminated objects, such as tanks and silos, with a mold 1 comprising a plurality of wall segments 3 defining an outer circumference of the mold 1. The method according to the invention may advantageously be implemented by the mold 1 according to the invention. In particular, the mold 1 illustrated in FIGS. 1-2, preferably in combination with the cap mold 30 illustrated in FIG 5, may be employed advantageously to implement the method of FIG. 6 while the mold 1 illustrated in FIG. 3 may be employed advantageously to implement the method of FIG. 7.

In both illustrated embodiments of the method, it comprises a step C of simultaneously adjusting a position of each of the plurality of wall segments 3 to set a dimension of the outer circumference of the mold 1, a step E of providing laminate onto the outer circumference of the mold 1 to produce a tubular laminated object 100, and a step F of simultaneously adjusting the position of each of the plurality of wall segments 3 to decrease the dimension of the outer circumference of the mold 1 and thereby release the produced tubular laminated object 100 from the mold 1. A tubular laminated object 100 is thus produced.

Step E is generally performed while rotating the mold 1 around the axial direction 200 while a source of laminate is moved along the outer circumference of the mold 1 in the axial direction 200.

At least one of step C and step F may be executed by an actuator 4 of the mold 1. Preferably, both step C as well as step F are performed with the same actuator 4 of the mold 1. That is, both the setting as well as the decreasing of the dimension of the outer circumference of the mold 1 may be performed by means of the actuator 4.

In FIG. 6, further optional steps are illustrated. In a step B, a cap 110 is arranged at an axial end of the outer circumference of the mold 1. In a step D, laminate is provided onto the cap 110 and overlapping with the outer circumference of the mold 1 to produce the laminated tubular object 100 with the cap 110 integrated. This may result in overlap section 103. In an optional preceding step A, laminate is provided onto an outer surface of a cap mold 30 to produce the cap 110.

Though it is preferred that the cap 110 is a laminated object, it may be produced otherwise and / or from different materials, e.g. injection molding plastic or die casting metal. Thus, the step A is optional and need not be performed even when step B is performed in the method.

In step B, the cap 110 may be mounted at or partially overlapping with an end of the plurality of wall segments 3 in the axial direction 200. The cap 110 can be mounted on the mold 1 in partial overlap by having a radial dimension that exceeds the radial dimension obtained in the step C of setting the dimension of the outer circumference of the mold 1. The cap 110, in particular when it is produced in the step A as a laminated object cap 110, is thus dimensioned for the set outer circumference of the mold 1, wherein the laminated object cap 110 provides an overlap so that in step D laminate can be provided onto the cap 110 in overlap with the outer circumference of the mold 1.

The order of steps B and C can be changed, i.e. the setting of the dimension of the outer circumference of the mold 1 may precede or follow the step of arranging the cap 110 on the mold 1. The step D can be integral to the step E but may also be performed separately.

The methods of FIGS. 6 and 7 further comprise three optional steps: a step G of shifting the produced tubular laminated object 100 in the axial direction 200 along the outer circumference of the mold 1, a step H of simultaneously adjusting the position of each of the plurality of wall segments 3 to hold the produced tubular laminated object 100 in its shifted position, and a step J of providing laminate onto the outer circumference of the mold 1 to extend the produced tubular laminated object 100.

In step G, a completed section 101 of the tubular laminated object 100 may be shifted along the outer circumference of the mold 1 to make space for laminating an extension section 102 of the tubular laminated object 100 onto the same outer circumference of the mold 1 in step J. The extension section 102 may be laminated integrally with the completed section 101, for example by providing laminate in overlap onto the produced tubular laminated object to obtain an overlap section 103. The overlap section 103 may form a sleeve joint.

In step H, the simultaneously adjusting of the position of each of the plurality of wall segments 3 may result in their return to the previously set dimension of the outer circumference (step C). The step H is preferably executed by the actuator 4 of the mold 1. An object support 9, such as a cap support 10 and / or radial object supports 15, may also aid in holding the tubular laminated objected 100 in its shifted position.

After completion of step J, step F may again be performed to release the tubular laminated product 100 from the mold 1.

In FIG. 6, the step G comprises raising the mounted cap 110 to a higher level and thereby raising the tubular laminated object 100 produced integrally with the cap 110. This shows an advantageous use of the cap 110 during production of the tubular laminated object 100. The shifting of the produced tubular laminated object 100 along the mold 1 in step G may comprise extending an extendable shaft 11 of the mold 1, for example in a vertically arranged mold 1 illustrated in FIG. 1. The extendable shaft 11 may also contribute to the holding the produced tubular laminated object 100 in its shifted position. Alternatively or additionally, the produced tubular laminated object 100 may be shifted by means of a crane and held by internal and / or external object supports.

By using the cap 110 in the way illustrated in step G of FIG. 6, the method enables production of relatively large diameters compared to a horizontal production method such as the embodiment illustrated in FIG. 7. In a horizontal configuration of the mold 1, larger diameters would become too heavy, whereas upright configurations can better carry the combined laminated mass, in particular by means of the cap 110, which ensures an advantageous distribution of mass. Sufficient length of the tubular laminated object 100, e.g. extending beyond a dimension of the mold 1 in the axial direction 200, can be achieved by joining the sections 101, 102 together as illustrated in FIG. 6 or 7, or in conventional ways after removing sections from the mold 1. A horizontal configuration may be preferred for production speed while an upright configuration may be preferred for large product diameters.

When a cap 110 is used in producing the tubular laminated object 100, it may be maintained in the final product but may also be cut off to provide a tubular laminated object 100 with two open ends that is up to twice the length in the axial direction of the outer circumference of the mold 1. The same cap 110 may then be employed to restart the process of manufacturing tubular laminated objects 100 including their extension by means of shifting completed sections 101 and extending these with extension sections 102.

## Claims

1. Mold (1) configured to produce tubular laminated objects (100), such as tanks and silos, on an outer circumference of the mold (1), wherein the mold (1) comprises:
- a central shaft (2) extending in an axial direction (200);
- a plurality of wall segments (3) extending in the axial direction (200), surrounding the central shaft (2) and defining the outer circumference of the mold (1), wherein the mold (1) is configured to set a dimension of the outer circumference of the mold (1) by adjusting, preferably simultaneously adjusting by means of an actuator (4), a radial distance of each of the plurality of wall segments (3) relative to the central shaft (2); and
- an object support (9) configured to support at least one of: a completed section (101) of the tubular laminated object (100) in alignment with the outer circumference of the mold (1) defined by the plurality of wall segments (3); and a cap (110) of the tubular laminated object (100).

2. Mold (1) according to claim 1, wherein the object support (9) comprises a cap support (10) configured to support the cap (110) of the tubular laminated object (100).

3. Mold (1) according to claim 1 or 2, further comprising an extendable shaft (11) configured to support the object support (9), preferably the cap support (10), and to extend in the axial direction (200).

4. Mold (1) according to claim 3, wherein the extendable shaft (11) is arranged on or in the central shaft (2).

5. Mold (1) according to any of the previous claims, wherein the wall segments (3) are at least one of:
- shaped as panels;
- bent along the outer circumference of the mold (1); and
- configured to contact neighboring wall segments (3) when overlapping.

6. Mold (1) according to any of the previous claims, wherein the dimension of the outer circumference of the mold (1) is continuously adjustable between the minimum dimension of the outer circumference and the maximum dimension of the outer circumference.

7. Mold (1) according to any previous claim, wherein the axial direction (200) extends in an upright direction or in a horizontal direction.

8. System configured to produce tubular laminated objects (100), such as tanks and silos, wherein the system comprises:
- a mold (1) according to any of the previous claims configured to produce tubular sections for the tubular laminated objects (100) on the outer circumference of the mold; and
- a cap mold (30) configured to produce caps (110) for tubular laminated objects (100), such as end caps for tanks and silos, on an outer surface of the cap mold (30), wherein a radial dimension of the outer surface of the cap mold (30) is at least as large as a maximum radial dimension of the outer circumference of the mold (1).

9. System according to claim 8, wherein the cap mold (30) is conically shaped, preferably with an inclination angle relative to the base plane of the cone in a range of 10° - 30°, more preferably 15° - 25° and most preferably of 20°.

10. System according to claim 8 or 9, wherein the mold (1) comprises a cap support (10) configured to support the cap (110) of the tubular laminated object (100) and the cap support (10) is configured to match a shape of the cap (110) obtained with the cap mold (30).

11. Method of producing tubular laminated objects (100), such as tanks and silos, with a mold (1) comprising a plurality of wall segments (3) defining an outer circumference of the mold (1), the method comprising:
- optionally, a step B of arranging a cap (110) at an axial end of the outer circumference of the mold (1) on a cap support (10) of the mold (1);
- a step C of adjusting, preferably simultaneously adjusting, a position of each of the plurality of wall segments (3) to set a dimension of the outer circumference of the mold (1);
- a step E of providing laminate onto the outer circumference of the mold (1) to produce a tubular laminated object (100);
- a step F of adjusting, preferably simultaneously adjusting, the position of each of the plurality of wall segments (3) to decrease the dimension of the outer circumference of the mold (1) and release the produced tubular laminated object (100) from the mold (1);
- optionally, a step G of shifting the produced tubular laminated object (100) in the axial direction (200) along the outer circumference;
- optionally, a step H of adjusting, preferably simultaneously adjusting, the position of each of the plurality of wall segments (3) to hold the produced tubular laminated object (100) in its shifted position; and
- optionally, a step J of providing laminate onto the outer circumference of the mold (1) to extend the produced tubular laminated object (100),
wherein the method comprises the step B and/or the steps G, H and J.

12. Method according to claim 11, comprising the step B and further comprising a step D of providing laminate onto the cap (110) and overlapping with the outer circumference of the mold (1) to produce the laminated tubular object (100) with the cap (110) integrated.

13. Method according to claim 11 or 12, comprising the steps B, G, H and J, wherein the step G comprises raising the mounted cap (110) to a higher level and thereby raising the tubular laminated object (100) produced integrally with the cap (110).

14. Method according to any of the claims 11 - 13, further comprising a step A of providing laminate onto an outer surface of a cap mold (30) to produce the cap (110).

15. Method according to any of the claims 11 - 14, wherein at least one of:
- the step E comprises at least one of: rotating at least the outer circumference of the mold (1) around the axial direction (200); and moving a source of laminate along the outer circumference of the mold (1) in the axial direction (200);
- the method comprises executing at least one of the steps C and F as well as H, where present, by an actuator (4) of the mold (1), preferably executing each of the steps C and F and H, where present, by the same actuator (4) of the mold (1); and
- a mold (1) according to any of the claims 1 - 7 and / or a system according to any of the claims 8 - 10 is employed.

## Patentansprüche

1. Form (1), die konfiguriert ist, um röhrenförmige laminierte Objekte (100) wie Tanks und Silos auf einem Außenumfang der Form (1) herzustellen, wobei die Form (1) umfasst:
- eine zentrale Welle (2), die sich in eine axiale Richtung (200) erstreckt;
- eine Vielzahl von Wandsegmenten (3), die sich in die axiale Richtung (200) erstrecken, die zentrale Welle (2) umgeben und den Außenumfang der Form (1) definieren, wobei die Form (1) konfiguriert ist, um eine Abmessung des Außenumfangs der Form (1) durch Anpassen, vorzugsweise gleichzeitiges Anpassen mittels eines Stellantriebs (4), eines radialen Abstands jedes der Vielzahl von Wandsegmenten (3) relativ zu der zentralen Welle (2) einzustellen; und
- eine Objektstütze (9), die konfiguriert ist, um mindestens eines zu stützen von: einem vollständigen Abschnitt (101) des röhrenförmigen laminierten Objekts (100) in Ausrichtung mit dem Außenumfang der Form (1), der durch die Vielzahl von Wandsegmenten (3) definiert ist; und einer Kappe (110) des röhrenförmigen laminierten Objekts (100).

2. Form (1) nach Anspruch 1, wobei die Objektstütze (9) eine Kappenstütze (10), die konfiguriert ist, um die Kappe (110) des röhrenförmigen laminierten Objekts (100) zu stützen, umfasst.

3. Form (1) nach Anspruch 1 oder 2, ferner umfassend einen ausfahrbaren Schaft (11), der konfiguriert ist, um die Objektstütze (9), vorzugsweise die Kappenstütze (10), zu stützen und um sich in die axiale Richtung (200) zu erstrecken.

4. Form (1) nach Anspruch 3, wobei der ausfahrbare Schaft (11) auf oder in der zentralen Welle (2) angeordnet ist.

5. Form (1) nach einem der vorhergehenden Ansprüche, wobei die Wandsegmente (3) mindestens eines sind von:
- als Platten geformt;
- gebogen entlang des Außenumfangs der Form (1); und
- konfiguriert, um benachbarte Wandsegmente (3) zu berühren, wenn sie sich überlappen.

6. Form (1) nach einem der vorhergehenden Ansprüche, wobei die Abmessung des Außenumfangs der Form (1) zwischen der minimalen Abmessung des Außenumfangs und der maximalen Abmessung des Außenumfangs durchgehend anpassbar ist.

7. Form (1) nach einem der vorhergehenden Ansprüche, wobei sich die axiale Richtung (200) in eine aufrechte Richtung oder in eine horizontale Richtung erstreckt.

8. System, das konfiguriert ist, um röhrenförmige laminierte Objekte (100) wie Tanks und Silos herzustellen, wobei das System umfasst:
- eine Form (1) nach einem der vorhergehenden Ansprüche, die konfiguriert ist, um röhrenförmige Abschnitte für die röhrenförmigen laminierten Objekte (100) auf dem Außenumfang der Form herzustellen; und
- eine Kappenform (30), die konfiguriert ist, um Kappen (110) für röhrenförmige laminierte Objekte (100) wie Endkappen für Tanks und Silos auf einer Außenoberfläche der Kappenform (30) herzustellen, wobei eine radiale Abmessung der Außenoberfläche der Kappenform (30) mindestens so groß wie eine maximale radiale Abmessung des Außenumfangs der Form (1) ist.

9. System nach Anspruch 8, wobei die Kappenform (30) konisch geformt ist, vorzugsweise mit einem Neigungswinkel relativ zu der Basisebene des Kegels in einem Bereich von 10° - 30°, mehr bevorzugt von 15° - 25°, und am meisten bevorzugt von 20°.

10. System nach Anspruch 8 oder 9, wobei die Form (1) eine Kappenstütze (10) , die konfiguriert ist, um die Kappe (110) des röhrenförmigen laminierten Objekts (100) zu stützen, umfasst und die Kappenstütze (10) konfiguriert ist, um einer Form der Kappe (110), die mit der Kappenform (30) erhalten wird, zu entsprechen.

11. Verfahren zum Herstellen von röhrenförmigen laminierten Objekten (100) wie Tanks und Silos mit einer Form (1), umfassend eine Vielzahl von Wandsegmenten (3), die einen Außenumfang der Form (1) definieren, das Verfahren umfassend:
- optional einen Schritt B zum Anordnen einer Kappe (110) an einem axialen Ende des Außenumfangs der Form (1) auf einer Kappenstütze (10) der Form (1);
- einen Schritt C zum Anpassen, vorzugsweise gleichzeitigen Anpassen, einer Position jedes der Vielzahl von Wandsegmenten (3), um eine Abmessung des Außenumfangs der Form (1) einzustellen;
- einen Schritt E zum Bereitstellen von Laminat auf den Außenumfang der Form (1), um ein röhrenförmiges laminiertes Objekt (100) herzustellen;
- einen Schritt F zum Anpassen, vorzugsweise gleichzeitigen Anpassen, der Position jedes der Vielzahl von Wandsegmenten (3), um die Abmessung des Außenumfangs der Form (1) zu verringern und das hergestellte röhrenförmige laminierte Objekt (100) aus der Form (1) freizugeben;
- optional einen Schritt G zum Verschieben des hergestellten röhrenförmigen laminierten Objekts (100) in die axiale Richtung (200) entlang des Außenumfangs;
- optional einen Schritt H zum Anpassen, vorzugsweise gleichzeitigen Anpassen, der Position jedes der Vielzahl von Wandsegmenten (3), um das hergestellte röhrenförmige laminierte Objekt (100) in seiner verschobenen Position zu halten; und
- optional einen Schritt J zum Bereitstellen von Laminat auf den Außenumfang der Form (1), um das hergestellte röhrenförmige laminierte Objekt (100) auszufahren,
wobei das Verfahren den Schritt B und/oder die Schritte G, H und J umfasst.

12. Verfahren nach Anspruch 11, umfassend den Schritt B und ferner umfassend einen Schritt D zum Bereitstellen von Laminat auf die Kappe (110) und Überlappen mit dem Außenumfang der Form (1), um das laminierte röhrenförmige Objekt (100) mit der Kappe (110) integriert herzustellen.

13. Verfahren nach Anspruch 11 oder 12, umfassend die Schritte B, G, H und J, wobei der Schritt G ein Anheben der montierten Kappe (110) auf eine höhere Stufe und dadurch das Anheben des mit der Kappe (110) einstückig hergestellten röhrenförmigen laminierten Objekts (100) umfasst.

14. Verfahren nach einem der Ansprüche 11 bis 13, ferner umfassend einen Schritt A zum Bereitstellen von Laminat auf eine Außenoberfläche einer Kappenform (30), um die Kappe (110) herzustellen.

15. Verfahren nach einem der Ansprüche 11 bis 14, wobei mindestens eines von:
- dem Schritt E mindestens eines umfasst von: Drehen mindestens des Außenumfangs der Form (1) um die axiale Richtung (200); und Bewegen einer Laminatquelle entlang des Außenumfangs der Form (1) in die axiale Richtung (200);
- dem Verfahren ein Ausführen mindestens eines der Schritte C und F sowie H, sofern vorhanden, durch einen Stellantrieb (4) der Form (1), vorzugsweise das Ausführen jedes der Schritte C und F und H, sofern vorhanden, durch denselben Stellantrieb (4) der Form (1), umfasst; und
- eine Form (1) nach einem der Ansprüche 1 bis 7 und/oder ein System nach einem der Ansprüche 8 bis 10 genutzt wird.

## Revendications

1. Moule (1) conçu pour produire des objets laminés tubulaires (100), tels que des réservoirs et des silos, sur une circonférence externe du moule (1), dans lequel le moule (1) comprend :
- un arbre central (2) s'étendant dans une direction axiale (200) ;
- une pluralité de segments de paroi (3) s'étendant dans la direction axiale (200), entourant l'arbre central (2) et définissant la circonférence externe du moule (1), dans lequel le moule (1) est conçu pour régler une dimension de la circonférence externe du moule (1) en ajustant, de préférence en ajustant simultanément au moyen d'un actionneur (4), une distance radiale de chacun de la pluralité de segments de paroi (3) par rapport à l'arbre central (2) ; et
- un support d'objet (9) conçu pour supporter au moins l'un parmi : une section achevée (101) de l'objet laminé tubulaire (100) en alignement avec la circonférence externe du moule (1) définie par la pluralité de segments de paroi (3) ; et un bouchon (110) de l'objet laminé tubulaire (100).

2. Moule (1) selon la revendication 1, dans lequel le support d'objet (9) comprend un support de bouchon (10) conçu pour supporter le bouchon (110) de l'objet laminé tubulaire (100).

3. Moule (1) selon la revendication 1 ou 2, comprenant en outre un arbre extensible (11) conçu pour supporter le support d'objet (9), de préférence le support de bouchon (10), et pour s'étendre dans la direction axiale (200).

4. Moule (1) selon la revendication 3, dans lequel l'arbre extensible (11) est disposé sur ou dans l'arbre central (2).

5. Moule (1) selon l'une quelconque des revendications précédentes, dans lequel les segments de paroi (3) sont au moins l'un parmi :
- en forme de panneaux ;
- pliés le long de la circonférence externe du moule (1) ; et
- conçus pour entrer en contact avec des segments de paroi (3) voisins lorsqu'ils se chevauchent.

6. Moule (1) selon l'une quelconque des revendications précédentes, dans lequel la dimension de la circonférence externe du moule (1) est ajustable en continu entre la dimension minimale de la circonférence externe et la dimension maximale de la circonférence externe.

7. Moule (1) selon l'une quelconque revendication précédente, dans lequel la direction axiale (200) s'étend dans une direction verticale ou dans une direction horizontale.

8. Système conçu pour produire des objets laminés tubulaires (100), tels que des réservoirs et des silos, dans lequel le système comprend :
- un moule (1) selon l'une quelconque des revendications précédentes conçu pour produire des sections tubulaires pour les objets laminés tubulaires (100) sur la circonférence externe du moule ; et
- un moule à bouchon (30) conçu pour produire des bouchons (110) pour des objets laminés tubulaires (100), tels que des bouchons d'extrémité pour des réservoirs et des silos, sur une surface externe du moule à bouchon (30), dans lequel une dimension radiale de la surface externe du moule à bouchon (30) est au moins aussi grande qu'une dimension radiale maximale de la circonférence externe du moule (1).

9. Système selon la revendication 8, dans lequel le moule à bouchon (30) est de forme conique, de préférence avec un angle d'inclinaison par rapport au plan de base du cône dans une plage de 10° à 30°, plus préférablement de 15° à 25° et le plus préférablement de 20°.

10. Système selon la revendication 8 ou 9, dans lequel le moule (1) comprend un support à bouchon (10) conçu pour supporter le bouchon (110) de l'objet laminé tubulaire (100) et le support de bouchon (10) est conçu pour correspondre à une forme du bouchon (110) obtenue avec le moule à bouchon (30).

11. Procédé de production d'objets laminés tubulaires (100), tels que des réservoirs et des silos, avec un moule (1) comprenant une pluralité de segments de paroi (3) définissant une circonférence externe du moule (1), le procédé comprenant :
- éventuellement, une étape B consistant à disposer un bouchon (110) au niveau d'une extrémité axiale de la circonférence externe du moule (1) sur un support de bouchon (10) du moule (1) ;
- une étape C consistant à ajuster, de préférence à ajuster simultanément, une position de chacun de la pluralité de segments de paroi (3) pour régler une dimension de la circonférence externe du moule (1) ;
- une étape E consistant à fournir du laminé sur la circonférence externe du moule (1) pour produire un objet laminé tubulaire (100) ;
- une étape F consistant à ajuster, de préférence à ajuster simultanément, la position de chacun de la pluralité de segments de paroi (3) pour diminuer la dimension de la circonférence externe du moule (1) et libérer l'objet laminé tubulaire (100) produit du moule (1) ;
- éventuellement, une étape G consistant à décaler l'objet laminé tubulaire (100) produit dans la direction axiale (200) le long de la circonférence externe ;
- éventuellement, une étape H consistant à ajuster, de préférence à ajuster simultanément, la position de chacun de la pluralité de segments de paroi (3) pour maintenir l'objet laminé tubulaire (100) produit dans sa position décalée ; et
- éventuellement, une étape J consistant à fournir du laminé sur la circonférence externe du moule (1) pour étendre l'objet laminé tubulaire (100) produit,
dans lequel le procédé comprend l'étape B et/ou les étapes G, H et J.

12. Procédé selon la revendication 11, comprenant l'étape B et comprenant en outre une étape D consistant à fournir du laminé sur le bouchon (110) et à le faire chevaucher avec la circonférence externe du moule (1) pour produire l'objet tubulaire laminé (100) avec le bouchon (110) intégré.

13. Procédé selon la revendication 11 ou 12, comprenant les étapes **B,** G, H **et J,** dans lequel l'étape G comprend le relevage du bouchon monté (110) à un niveau supérieur et de ce fait le relevage de l'objet laminé tubulaire (100) produit d'un seul tenant avec le bouchon (110).

14. Procédé selon l'une quelconque des revendications 11 à 13, comprenant en outre une étape A consistant à fournir du laminé sur une surface externe d'un moule à bouchon (30) pour produire le bouchon (110).

15. Procédé selon l'une quelconque des revendications 11 à 14, dans lequel au moins l'un parmi :
- l'étape E comprend au moins l'un parmi : la rotation d'au moins la circonférence externe du moule (1) autour de la direction axiale (200) ; et le déplacement d'une source de laminé le long de la circonférence externe du moule (1) dans la direction axiale (200) ;
- le procédé comprend l'exécution d'au moins l'une des étapes C et F ainsi que **H,** le cas échéant, par un actionneur (4) du moule (1), de préférence l'exécution de chacune des étapes C et F et **H,** le cas échéant, par le même actionneur (4) du moule (1) ; et
- un moule (1) selon l'une quelconque des revendications 1 à 7 et/ou un système selon l'une quelconque des revendications 8 à 10 est utilisé.
